Europäisches Patentamt

European Patent Office

Office européen des brevets

(11) Veröffentlichungsnummer: **0 470 279 A1**

## (12) EUROPÄISCHE PATENTANMELDUNG

(21) Anmeldenummer: **90115187.8**

(22) Anmeldetag: **07.08.90**

(51) Int. Cl.5: **H01S 3/03**

(43) Veröffentlichungstag der Anmeldung:
**12.02.92 Patentblatt 92/07**

(84) Benannte Vertragsstaaten:
**DE FR GB IT**

(71) Anmelder: **SIEMENS AKTIENGESELLSCHAFT**
**Wittelsbacherplatz 2**
**W-8000 München 2(DE)**

(72) Erfinder: **Krüger, Hans, Dipl.-Phys**
**Peralohstrasse 13**
**W-8000 München 83(DE)**
Erfinder: **Welsch, Wolfgang, Dr.-Ing.**
**Fuchsweg 25b**
**W-8011 Baldham(DE)**

(54) **Vakuumdicht verschlossener Gaslaser.**

(57) Eine rationell herstellbare Ausführungsform für einen vakuumdicht verschlossenen Gaslaser (1) weist die Merkmale auf, daß sie einen Pumpkanal (3) enthält, daß im Bereich des Pumpkanals (3) eine schwer oxidierbare Lötfläche (5) angeordnet ist und daß Weichlot nach dem Schmelzen eines Weichlotringes (6) den Pumpkanal (3) vakuumdicht verschließt.

Die erfindungsgemäße Ausführung ist vorgesehen für Gaslaser, insbesondere Glaslotlaser.

FIG 1

EP 0 470 279 A1

Die vorliegende Erfindung betrifft einen vakuumdicht verschlossenen Gaslaser nach dem Oberbegriff des Patentanspruchs 1. Ein derartiger Laser ist aus dem Siemens-Prospekt 1986/87, "Für die He-Ne-Lasertechnik: Röhren, Module, Stromversorgungen", Seite 2 bekannt. Der bekannte Laser enthält zum Abpumpen und Füllen mit Lasergas einen sogenannten Pumpstengel, das ist ein Metallrohr, welches nach dem endgültigen Füllen des Lasers durch Zusammendrücken kaltverschweißt und damit vakuumdicht verschlossen wurde. Diese Laser sind vakuumdicht, wenn das Metall vor dem Verschließen nicht oxidiert war. Diese Bedingung bedeutet für die Fertigung einen erheblichen Aufwand, beispielsweise müssen beim Zusammenlöten der Teile und beim Einlöten der Spiegel zumindest auf der Kathodenseite die Laser in einer Schutzgasatmosphäre gehalten werden.

Die Aufgabe, die der vorliegenden Erfindung zugrundeliegt, besteht darin, einen mit geringerem Aufwand herstellbaren Laser anzugeben, der dennoch ein einwandfrei vakuumdichtes Gehäuse besitzt, um zusätzlich die Empfindlichkeit des Laser beim Handling herabzusetzen.

Diese Aufgabe wird bei einem Laser nach dem Oberbegriff durch die kennzeichnenden Merkmale des Patentanspruchs 1 gelöst. Die Erfindung ist insbesondere für Glaslotlaser von großem Vorteil, da dort beim Zusammenlöten des Lasers mittels Glaslot alle Teile, also auch der Pumpkanal auf zumindest etwa 500˚ erhitzt werden und anschließend nicht mehr ohne weiteres von Oxiden gereinigt werden können.

Ein wesentlicher Vorteil der Erfindung besteht darin, daß eine beliebige Zahl von Lasern gleichzeitig in einem Kessel evakuiert, ausgeheizt und mit Lasergas gefüllt werden kann und daß weder vor noch während dieser Arbeitsgänge ein Schutzgas vorhanden sein muß.

Der Laser weist vorteilhaft die Merkmale auf, daß der Pumpkanal ein Metallrohr enthält, daß die Innenwand des Metallrohres zumindest teilweise mit einem schwer oxidierbaren und lötfähigen Metall beschichtet ist und daß das Metallrohr mittels Weichlot vakuumdicht verschlossen ist. Unter einem schwer oxydierbaren und lötfähigen Metall wird ein reines Metall oder eine Legierung verstanden, die bei den höchsten vor der Lötung zu erwartenden Temperaturen keine oder nur solche Oxyde bildet, die im Weichlot löslich sind und daher eine Lötung nicht stören. Dabei eignet sich als lötfähiges, schwer oxidierbares Metall z.B. Au, Ag, Ag/Pd. Eine weitere vorteilhafte Ausführungsform ist gegeben, indem der Pumpkanal durch eine Ausnehmung im Lasergehäuse gebildet ist, indem die schwer oxidierbare Lötfläche die Ausnehmung umschließt und indem ein Deckel auf dem Pumpkanal angeordnet und mittels Weichlotes mit der Lötfläche verlötet ist. Diese Ausführung eignet sich insbesondere für relativ weite Pumpkanäle, in denen die Kapillarwirkung und die Kohäsion des Lotmetalles nicht zur Bildung eines Verschlusses ausreicht. Ein relativ großer Querschnitt für das Abpumpen kann auch erreicht werden, indem der Pumpkanal durch zwei oder mehrere Ausnehmungen gebildet ist, indem die schwer oxidierbare Lötfläche diese Ausnehmungen umschließt und indem eine Weichlotschicht diese Ausnehmungen vakuumdicht abdeckt.

Ein vorteilhaftes Verfahren zur Herstellung derartiger Gaslaser weist die Merkmale auf, daß zwei oder mehr Laser in einem beheizbaren Gefäß angeordnet werden, daß das Weichlot in Form von Lotringen oder Lotscheiben an die Lotflächen angrenzend derart angeordnet wird, daß der Pumpkanal nicht vollständig verschlossen wird, daß das Gefäß evakuiert, ausgeheizt und mit Lasergas gefüllt wird und daß dann die Temperatur im Gefäß soweit erhöht wird, daß die Lotringe bzw. Lotscheiben schmelzen und die Pumpkanäle vakuumdicht verschließen. Dabei wird vorteilhaft der Pumpkanal durch ein sich nach außen erweiterndes Metallrohr gebildet, wobei in den erweiterten Teil des Metallrohres ein Lotring eingesetzt wird und wobei das Metallrohr im Vakuumgefäß nach oben ragend angeordnet wird, so daß das Lot unter dem Einfluß der Schwerkraft in den schmalen Teil des Pumpkanals fließt und diesen verschließt.

Eine weitere vorteilhafte Ausgestaltung besteht darin, daß ein Wandteil, der an einen durch eine Ausnehmung im Gefäß gebildeten Pumpkanal angrenzt, mit einer schwer oxidierbaren, lötfähigen Metallschicht überzogen wird, daß darauf ein Lotring und schließlich ein Deckel mit einer nach dem Verlöten in dem Pumpkanal hineinragenden Vertiefung angeordnet wird und daß der Deckel und/oder der Lotring und/oder der Pumpkanal so geformt werden, daß zwischen dem Deckel und dem Lotring bzw. dem Lotring und der lötbaren Fläche Luftspalte frei bleiben. So kann auch diese Ausführungsform evakuiert und gefüllt werden, während beim Verlöten eine Selbstzentrierung des Deckels auftritt. Die Gestaltung von Deckel bzw. Lotring bzw. Pumpkanal kann hierbei ohne Rücksicht auf die Reihenfolge der vor dem Evakuieren liegenden Verfahrensschritte erfolgen.

Die Erfindung wird nun anhand von sechs Figuren näher erläutert.

FIG 1      zeigt einen Gaslaser mit einer erfindungsgemäßen Pumpöffnung vor dem Verlöten in teilweise geschnittener und gebrochener Ansicht. Die

FIG 2 bis 4      Zeigen verschiedene Beispiele eines Wandausschnittes mit einer erfindungsgemäß verschlossenen Pumpöffnung in teilweise gebrochener und geschnittener Ansicht. Die

FIG 5 und 6    stellen Flußdiagramme entsprechend den Verfahrensansprüchen 7 bzw. 8 dar.

Ein Gaslaser 1 ist mit einer Metallkappe 2 abgeschlossen. Die Metallkappe 2 besitzt eine Ausnehmung, in die ein sich nach außen erweiterndes Metallrohr 4 eingesetzt ist, welches den Pumpkanal bildet. Der Laser ist so angeordnet, daß das Pumprohr 4 nach oben ragt. Das Metallrohr 4 ist an seiner Innenwand mit einer schwer oxidierbaren, lötfähigen Schicht 5 überzogen. Ein Lotring 6 ist in das Metallrohr eingesetzt. Durch Erwärmen des Lasers auf Löttemperatur schmilzt der Lotring, fließt in die schmale Zone 7 des Metallrohres hinein und schließt diese vakuumdicht.

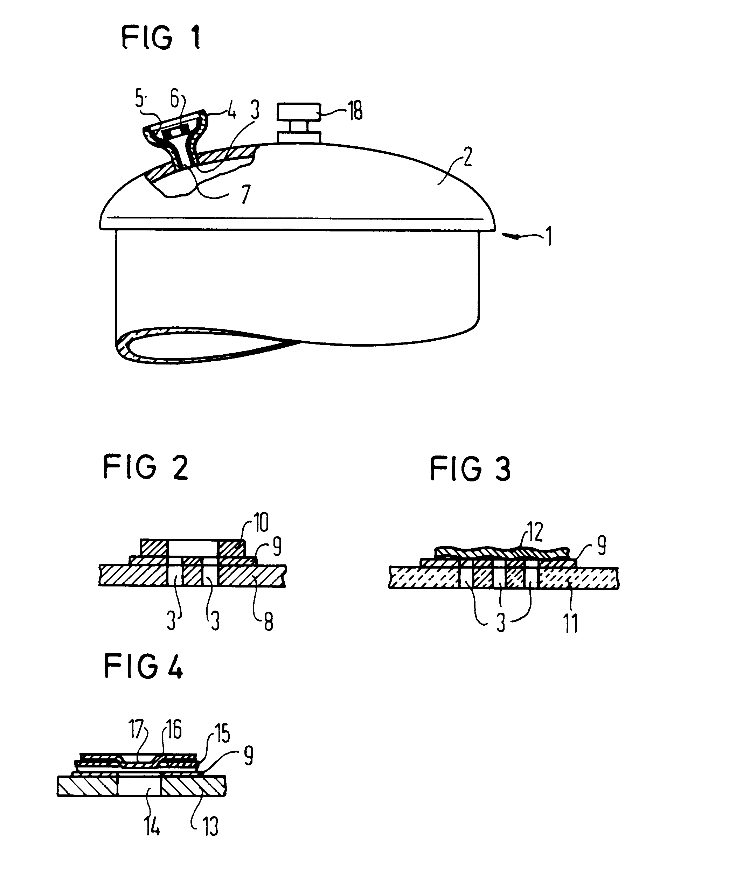

Das Beispiel von FIG 2 zeigt eine ebene Gehäusewand 8 im Ausschnitt, welche zwei oder mehr Pumpkanäle 3 enthält. Die an die Pumpkanäle 3 angrenzenden Wandteile sind mit einer lötfähigen, schwer oxidierbaren Metallschicht 9 beschichtet. Ein Lotring 10 umfaßt die Gesamtheit der Pumpkanäle 3. Beim Erhitzen schmilzt der Lotring und das Lot überdeckt aufgrund seiner Kohäsion die Pumpkanäle 3, so daß sie vakuumdicht verschlossen werden.

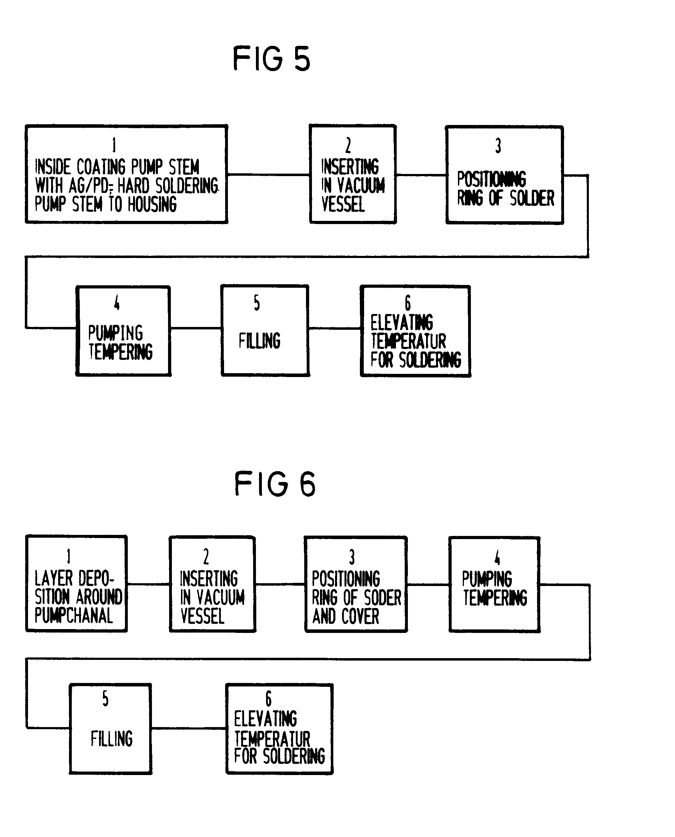

Das Beispiel der FIG 3 eignet sich insbesondere für eine größere Zahl von Pumpkanälen und für eine nichtmetallische Wand. Hier ist eine ebene Wand 11 mit mehreren Pumpkanälen 3 versehen. Die Umgebung der Pumpkanäle 3 ist mit einer schwer oxidierenden, lötfähigen Schicht 9 umgeben und die Gesamtheit der Pumpkanäle ist durch eine Lotplatte 12 abgedeckt. Die Lotplatte 12 ist zumindest auf der der Gefäßwand 13 zugewandten Seite uneben gestaltet, so daß die Pumpkanäle 3 mit der Umgebung in Verbindung stehen. Hier können die Pumpkanäle 3 etwas größer ausgeführt sein als bei dem vorgenannten Beispiel, da die Lotplatte die Pumpkanäle auch verschließen kann, wenn die Kohäsionskräfte hierzu nicht mehr ausreichen. Soll ein Pumpkanal mit größerem Querschnitt eingesetzt werden, so eignet sich die Ausführungsform der FIG 4. Hier ist eine Gehäusewand 13 wiederum mit einer schwer oxidierbaren, lötfähigen Schicht 9 im Bereich eines Pumpkanals 14 beschichtet. Auf die Schicht 9 ist ein Lotring 15 aufgelegt, in den ein Deckel 16 mit einer Vertiefung 17 hineinragt. Die Vertiefung 17 dient zur Justierung von Lotring und Deckel beim Einlöten, indem die Vertiefung 17 in den Pumpkanal 14 einsinkt und somit die Lage des Dekkels 16 fixiert. Der Deckel 16 kann beispielsweise aus verzinntem Nikkel bestehen. Auch andere Werkstoffe, die entweder verzinnt eingesetzt werden oder eine gute Lötfähigkeit besitzen, können für den Deckel verwendet werden.

Die schwer oxidierbare, lötfähige Schicht besteht in allen Beispielen vorzugsweise aus Silber oder einer Silber/Palladium-Legierung. Diese Stoffe werden von Weichlot im Gegensatz zu Gold nicht in störendem Maße angelöst. Der Lötvorgang kann ohne besondere Vorsichtsmaßnahmen wie besonders genaue Temperaturführung und Lötzeit durchgeführt werden.

Die erfindungsgemäße Anordnung ermöglicht relativ einfache Herstellungsverfahren, wie sie beispielsweise in den Figuren 5 und 6 dargestellt sind. Als vorbereitenden Verfahrensschritte werden z.B. Metallkappen mit Spiegelhalterungen 18 und Metallrohren 4 hart verlötet. Das Metallrohr 4 wird an seiner Innenwand mit einer lötfähigen, schwer oxidierbaren Schicht, beispielsweise aus Au, Ag, Ag/Pd versehen (Pos. 1 in FIG 5). Die Verfahrensschritte

2. Einsetzen in das Vakuumgefäß,

3. Anordnen des Lotringes und

4. Auspumpen und Ausheizen

können an Luft durchgeführt werden. Eine Spülung mit Inertgas ist nicht erforderlich. Nach dem Füllen mit dem Lasergas gemäß Position 5 genügt eine einfache Temperaturerhöhung gemäß Position 6 der FIG 5, um den Laser vakuumdicht zu verschließen. Bei diesem Verfahren ist ein Einzelanschluß von Lasern an eine komplizierte Pumpanlage und ein Abquetschen und Kaltverschweißen jedes einzelnen Pumprohres nicht erforderlich.

Eine noch weitere Vereinfachung besteht bei den Ausführungsformen der FIG 2 bis 4 und der Verfahrensführung gemäß FIG 6. Hierbei ist nur noch eine Metallisierung im Bereich der Pumpkanäle gemäß Position 1 erforderlich, nach dem Einsetzen in das Vakuumgefäß gemäß Position 2 werden Lotring und ggf. ein Deckel gemäß Position 3 eingesetzt und wiederum eine Vielzahl von Lasern geichzeitig in der beschriebenen Art weiterbehandelt, d.h. gemäß den Positionen 4 bis 6 ausgepumpt, ausgeheizt, gefüllt mit Lasergas, gelötet durch Temoeraturerhöhung.

Die Ausführungsform der FIG 1 eignet sich insbesondere auch für nichtmetallische, z.B. keramische Gehäuse. In diesem Fall wird das Metallrohr vorteilhaft mittels Glaslot eingelötet.

**Patentansprüche**

1.  Vakuumdicht verschlossener Gaslaser, welcher ein Lasergehäuse und einen dieses durchdringenden, verschlossenen Pumpkanal enthält, **dadurch gekennzeichnet**, daß im Bereich des Pumpkanals eine schwer oxidierbare Lötfläche angeordnet ist und daß ein Weichlot den Pumpkanal vakuumdicht verschließt.

2. Gaslaser nach Anspruch 1, **dadurchgekennzeichnet,** daß der Pumpkanal durch ein Metallrohr gebildet ist, daß die Innenwand des Metallrohres zumindest teilweise mit einem schwer oxidierbaren und lötfähigen Metall beschichtet ist und daß das Metallrohr mittels Weichlot vakuumdicht verschlossen ist.

3. Gaslaser nach einem der Ansprüche 1 oder 2, **dadurch gekennzeichnet,** daß als lötfähiges, schwer oxidierbares Metall Ag oder Ag/Pd dient.

4. Gaslaser nach Anspruch 1, **dadurch gekennzeichnet,** daß der Pumpkanal durch eine Ausnehmung im Lasergehäuse gebildet ist, daß die schwer oxidierbare Lötfläche die Ausnehmung umschließt und daß ein Deckel auf dem Pumpkanal angeordnet und mittels Weichlot mit der Lötfläche verlötet ist.

5. Gaslaser nach Anspruch 1, **dadurch gekennzeichnet,** daß der Pumpkanal durch zwei oder mehrere Ausnehmungen gebildet ist, daß die schwer oxidierbare Lötfläche diese Ausnehmungen umschließt und daß eine Weichlotschicht die Ausnehmungen vakuumdicht abdeckt.

6. Verfahren zur Herstellung eines Lasers nach einem der Ansprüche 1 bis 5, **dadurch gekennzeichnet,** daß zwei oder mehrere Laser in einem beheizbaren Vakuumgefäß angeordnet werden, daß das Weichlot in Form von Lotringen oder Lotscheiben an die Lotflächen angrenzend derart angeordnet wird, daß der Pumpkanal nicht vollständig verschlossen ist, daß das Vakuumgefäß evakuiert, ausgeheizt und mit Lasergas gefüllt wird und daß dann die Temperatur im Vakuumgefäß soweit erhöht wird, daß die Lotringe bzw. Lotscheiben schmelzen und die Pumpöffnungen vakuumdicht verschließen.

7. Verfahren nach Anspruch 6, **dadurch gekennzeichnet,** daß vor dem Evakuieren als Pumpkanal ein sich nach außen erweiterndes Metallrohr in eine Ausnehmung eines Gehäuses des Lasers mit einem erst über der Löttemperatur des Weichlotes erweichenden Lot eingelötet wird, daß in den erweiterten Teil des Metallrohres ein Lotring eingesetzt wird und daß das Metallrohr im Vakuumgefäß nach oben ragend angeordnet wird, so daß das Lot unter dem Einfluß der Schwerkraft in den schmalen Teil des Pumpkanals fließt und diesen verschließt.

8. Verfahren nach Anspruch 6, **dadurch gekenn**-

zeichnet, daß vor der Anordnung im Vakuumgefäß ein Wandteil, der an einen durch eine Ausnehmung im Gehäuse gebildeten Pumpkanal angrenzt, mit einer schwer oxidierbaren, lötfähigen Schicht überzogen wird, daß vor dem Evakuieren darauf ein Lotring und schließlich ein Deckel mit einer nach dem Verlöten in den Pumpkanal hineinreichenden Vertiefung angeordnet wird und daß der Deckel und/oder der Lotring und/oder der Pumpkanal so geformt werden, daß zwischen dem Deckel und dem Lotring bzw. dem Lotring und der lötbaren Schicht Luftspalte freibleiben.

FIG 1

FIG 2

FIG 3

FIG 4

EP 0 470 279 A1

# FIG 5

| 1 INSIDE COATING PUMP STEM WITH AG/PD- HARD SOLDERING PUMP STEM TO HOUSING | 2 INSERTING IN VACUUM VESSEL | 3 POSITIONING RING OF SOLDER |
|---|---|---|

| 4 PUMPING TEMPERING | 5 FILLING | 6 ELEVATING TEMPERATUR FOR SOLDERING |
|---|---|---|

# FIG 6

| 1 LAYER DEPO- SITION AROUND PUMPCHANAL | 2 INSERTING IN VACUUM VESSEL | 3 POSITIONING RING OF SODER AND COVER | 4 PUMPING TEMPERING |
|---|---|---|---|

| 5 FILLING | 6 ELEVATING TEMPERATUR FOR SOLDERING |
|---|---|

6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 023 743 (PHILIPS)<br>* Zusammenfassung; Seite 3, Zeilen 7-17; Figur 1 *<br>– – – | 1 | H 01 S 3/03 |
| A | FR-A-879 694 (LÖWE)<br>* Seite 2, Absatz 2; Figuren 4,5 *<br>– – – | 1,2 | |
| A | US-A-3 479 442 (DETRO)<br>* Spalte 3, Zeilen 14-74; Figuren 3,4,5 *<br>– – – – – | 1,4 | |

| RECHERCHIERTE SACHGEBIETE (Int. Cl.5) |
|---|
| H 01 S<br>H 01 J |

Der vorliegende Recherchenbericht wurde für alle Patentansprüche erstellt

| Recherchenort | Abschlußdatum der Recherche | Prüfer |
|---|---|---|
| Den Haag | 20 März 91 | WONGEL H. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
-----------------------------------------------------------
& : Mitglied der gleichen Patentfamilie, übereinstimmendes Dokument